(19) Europäisches Patentamt
European Patent Office
Office européen des brevets

(11) **EP 2 854 354 B1**

(12) **FASCICULE DE BREVET EUROPEEN**

(45) Date de publication et mention
de la délivrance du brevet:
**20.04.2016 Bulletin 2016/16**

(51) Int Cl.:
***H04L 27/26*** *(2006.01)*     ***H04L 27/36*** *(2006.01)*
***H04L 27/38*** *(2006.01)*     ***H04L 25/02*** *(2006.01)*

(21) Numéro de dépôt: **14186441.3**

(22) Date de dépôt: **25.09.2014**

(54) **Procédé de détermination des imperfections d'une voie d'émission et d'une voie de réception d'un équipement et équipement associé**

Verfahren zur Bestimmung von Störstellen eines Sende- und eines Empfangswegs eines Geräts und dazugehörige Vorrichtung

Method for determining imperfections of a transmitting channel and a receiving channel of a device and related device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2013 FR 1302251**

(43) Date de publication de la demande:
**01.04.2015 Bulletin 2015/14**

(73) Titulaire: **Thales**
**92200 Neuilly Sur Seine (FR)**

(72) Inventeur: **Traverso, Sylvain**
**92230 Gennevilliers (FR)**

(74) Mandataire: **Priori, Enrico**
**Marks & Clerk France**
**Conseils en Propriété Industrielle**
**Immeuble «Visium»**
**22, avenue Aristide Briand**
**94117 Arcueil Cedex (FR)**

(56) Documents cités:
**US-A1- 2008 310 534     US-A1- 2011 292 978**

• **LI YABO ET AL: "A new method to simultaneously estimate TX/RX IQ imbalance and channel for OFDM systems", 2013 IEEE INTERNATIONAL CONFERENCE ON COMMUNICATIONS (ICC), IEEE, 9 juin 2013 (2013-06-09), pages 4551-4555, XP032522459, ISSN: 1550-3607, DOI: 10.1109/ICC.2013.6655286 [extrait le 2013-11-04]**

**EP 2 854 354 B1**

**Description**

La présente invention concerne un procédé de détermination des imperfections des voies d'émission et de réception d'un équipement. Cette invention se rapporte au domaine des équipements nécessitant une transposition de fréquence entièrement analogique ou partiellement analogique, par exemple les équipements de communications radio, de communication via une fibre optique ou via une transmission audio. Cette transposition de fréquence est réalisée par la voie d'émission et la voie de réception de l'équipement.

L'invention se rapporte plus particulièrement à l'utilisation d'un procédé de calibration entièrement numérique d'un équipement permettant d'estimer et de compenser numériquement les déséquilibres entre la partie en phase et la partie en quadrature du signal présents dans le signal transposé (uniquement les imperfections de l'émetteur) et dans le signal en bande de base reçu (les imperfections de l'émetteur et du récepteur). Ces deux phénomènes sont dus aux imperfections analogiques présentes dans la voie d'émission et le voie de réception de l'équipement. La voie d'émission aussi connue sous l'expression modulateur IQ et la voie de réception sous l'expression démodulateur IQ.

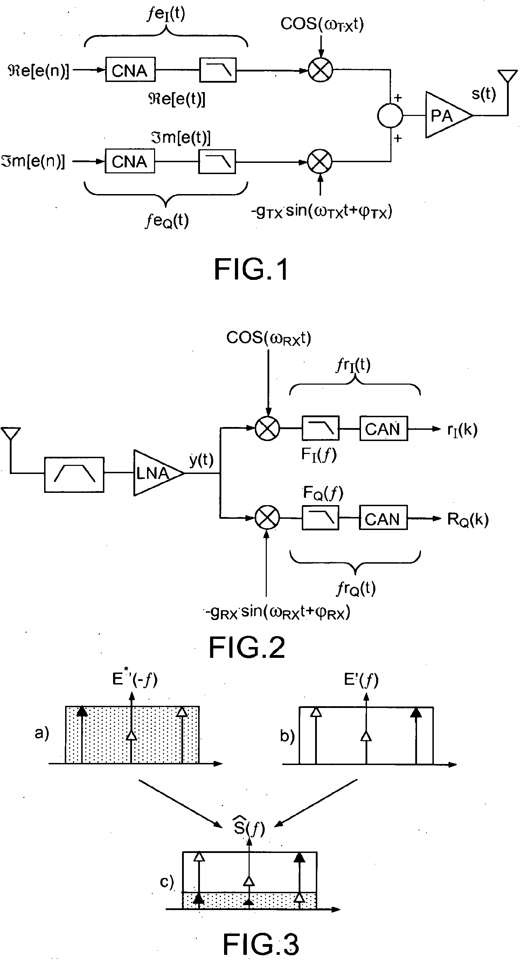

Si un équipement comporte une fonction de transposition de bande de base vers la fréquence porteuse (et inversement, de la porteuse vers bande de base) réalisée entièrement ou partiellement d'une manière analogique, il est nécessaire d'utiliser un modulateur IQ pour la voie d'émission, et un démodulateur IQ pour la voie de réception. Ce modulateur IQ et ce démodulateur IQ sont en général impactés par la perte de quadrature entre la voie en phase (connue aussi sous l'expression voie I) et la voie en quadrature (connue aussi sous l'expression voie Q). Ceci est illustré figure 1 et figure 2. Sur la figure 1 la voie en phase est représentée par l'élément $fe_I(t)$ et la voie en quadrature par l'élément $fe_Q(t)$. Sur la figure 2 la voie en phase est représentée par l'élément $fr_I(t)$ et la voie en quadrature par l'élément $fr_Q(t)$. Cette perte de quadrature est aussi connue sous l'expression.anglaise de « TX IQ imbalance » et de « RX IQ imbalance ». Cette perte de quadrature a des effets importants, en effet le moindre désaccord de phase et/ou de gain entre les voies I et Q entraine une perte de quadrature résultant en un auto-brouillage du signal émis (ou reçu) par lui-même. Cette perte de quadrature est représentée sur les figures 1 et 2 par les gains $g_{Tx}$ et $g_{Rx}$ et les phases $\varphi_{Tx}$ et $\varphi_{Rx}$, notons que si la voie d'émission n'est pas affectée par un déséquilibre alors $\varphi_{Tx} = 0$ et $g_{Tx} = 1$ et si la voie de réception n'est pas affectée par un déséquilibre alors $\varphi_{Rx}= 0$ et $g_{Rx} = 1$. Le niveau de cet auto-brouillage est d'autant plus important que la perte de quadrature est forte.

Les figures 3 et 4 présentent l'effet de cet auto-brouillage entre les différents signaux. Sur la figure 3 les éléments a), b) et c) correspondent respectivement à :

- la réponse en fréquence E'*(-f) du signal image e'*(t),
- la réponse en fréquence E'(f) du signal à transmettre e(t) et
- la réponse en fréquence $\hat{S}(f)$ du signal transmis.

La porteuse centrale représente la porteuse résultante. Le signal transmis est brouillé à la fois par son image.

Sur la figure 4 les éléments a), et b) correspondent respectivement à ;

- la réponse en fréquence du signal à l'entrée du démodulateur IQ, et
- à la réponse en fréquence R'(f) du signal affecté du déséquilibre IQ et de la composante continue.

La porteuse centrale représente la composante continue, et H(f) la réponse en fréquence du canal. Dans cet exemple, on constate que plus le canal est sélectif en fréquence, plus l'impact des interférences du signal à recevoir avec son image est importante.

Il est connu dans l'état de la technique des systèmes qui permettent de compenser les imperfections du modulateur IQ de la voie d'émission par une pré-compensation, et les imperfections du démodulateur IQ de la voie de réception par une post-compensation.

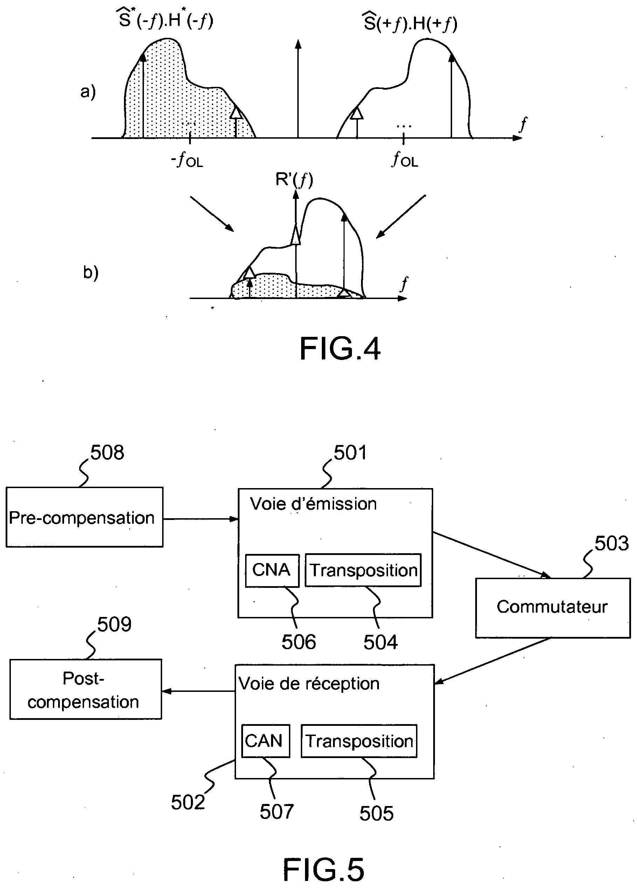

La figure 5 présente un poste radio connu dans l'état de la technique. Par exemple l'article de revue de B. Razavi, "Design Considérations for Direct-Conversion Receivers," publié dans la revue IEEE Transactions on Circuits and Systems II : Analog and Digital Signal processing, vol. 44, pp. 428-435, en Juin 1997, présente un tel poste de radio. Ce système comporte une voie d'émission 501 et une voie de réception 502. Ces deux voies sont reliées entre elles, avant l'antenne d'émission/réception. Cette connexion peut être réalisée par exemple grâce à un commutateur 503 (ou switch en anglais).

La voie d'émission comprend un premier dispositif 504 de transposition en fréquence du signal. Ce premier dispositif de transposition utilise une première fréquence de transposition. De même la voie de réception comprend un deuxième dispositif 505 de transposition en fréquence du signal. Ce deuxième dispositif de transposition utilise une deuxième fréquence de transposition.

Ces deux dispositifs de transpositions provoquent des imperfections connues sous l'expression déséquilibrage IQ et porteuse résultante.

Enfin la voie d'émission 501 et la voie d'émission 502 comportent respectivement un convertisseur numérique analogique 506 et un convertisseur analogique numérique 507. Ces deux convertisseurs permettent de convertir respectivement une séquence numérique en une séquence analogique et une séquence analogique en une séquence numérique.

Afin de compenser ces imperfections les systèmes de l'état de la technique comporte un dispositif de pré-compensation 508 et un dispositif de post compensation 509.

Si les paramètres utilisés par ces pré et post-compensations sont parfaitement connus, l'ensemble pré-compensation suivie d'une voie d'émission imparfaite et l'ensemble voie de réception imparfaite suivie d'une post-compensation se comportent respectivement comme une voie d'émission idéale et une voie de réception idéale.

Il est aussi connu des équipements dans lequel les voies d'émission et de réception ne sont pas reliées entre elle. Dans ce cas les signaux échangés entre les voies d'émission et de réception passent par le canal de propagation entre les antennes d'émission et de réception. Il est possible d'applique l'invention à un système dans lequel la voie d'émission et de réception sont situés dans des boitiers distincts et ne sont liées que par le canal radio.

Il est aussi connu dans l'état de la technique des systèmes qui permettent de déterminer les imperfections et donc de déterminer les précompensations ou les post-compensations à appliquer sur les signaux. Il est par exemple connu la demande de brevet WO2008/116821 qui présente une méthode de détermination des imperfections d'un dispositif comportant une voie d'émission et une voie de réception. Dans ce document les imperfections sont calculées en réalisant les étapes suivantes :

- Les imperfections de la voie de réception sont calculées en supposant les imperfections de la voie d'émission comme négligeables. La méthode est donc biaisée et approchée du fait de cette supposition.
- Les imperfections de la voie d'émission sont calculées à partir des imperfections de la voie de réception.
- Les imperfections de la voie de réception sont mises à jour à partir des imperfections de la voie d'émission. La méthode de ce procédé est donc itérative.

Le procédé de détermination des imperfections de la voie d'émission et de la voie de réception, décrit dans le document WO2008/116821, est donc itératif, approché et biaisé. De plus dans ce procédé il est fait une hypothèse sur la réponse en fréquence de l'ensemble du dispositif émission/réception rebouclé. En effet dans cette demande de brevet la solution présentée fonctionne uniquement si le canal entre la voie d'émission et de réception ne varie pas ou que peu en fonction de la fréquence d'analyse.

L'hypothèse réalisée est que le canal équivalent est considéré comme constant ou égal pour deux fréquences d'analyse.

Le document US 2008/310534 A1 divulgue une technique pour supprimer les imperfections des voies d'émission de la réponse en fréquence de l'ensemble du dispositif émetteur/canal de propagation/récepteur, mais pas pour leur estimation. En plus, le même document divulgue une technique pour l'estimation des imperfections des voies de réception, à partir des amplitudes et phases des séquences émises et reçues.

La présente invention propose un procédé de détermination des imperfections d'une voie d'émission et d'une voie de réception d'un équipement, d'une manière non-itérative, exacte, et quelle que soit la réponse en fréquence de l'élément permettant de relier la voie d'émission et la voie de réception.

Le procédé permet la détermination des imperfections d'une voie d'émission et d'une voie de réception d'un équipement. La voie d'émission comprend un premier dispositif de transposition en fréquence d'une séquence analogique vers un signal analogique, utilisant une première fréquence de transposition. La voie de réception comprend un deuxième dispositif de transposition en fréquence d'un signal analogique vers une séquence analogique, utilisant une deuxième fréquence de transposition différente de ladite première fréquence de transposition.

Le procédé comporte les étapes séquentielles suivantes:

- une étape de génération d'au moins deux premières séquences analogiques différentes,
- une étape de transposition en fréquence vers des signaux analogiques des premières séquences analogiques, par la voie d'émission,
- une étape de transmission des signaux analogiques de la voie d'émission à la voie de réception,
- une étape de transposition en fréquence vers des deuxièmes séquences analogiques des signaux analogiques reçus, par la voie de réception,
- une étape de calcul de premières amplitudes et de premières phases, d'une pluralité de composantes spectrales d'au moins deux des premières séquences analogiques à des premières fréquences d'intérêt et de deuxièmes amplitudes et de deuxièmes phases, d'une pluralité de composantes spectrales d'au moins deux des deuxièmes séquences analogiques à des premières fréquences d'intérêt,

Le procédé comporte en plus les deux étapes indépendantes suivantes :

- une étape de détermination des imperfections de la voie d'émission à partir uniquement des premières amplitudes, premières phases, deuxièmes amplitudes et/ou deuxièmes phases, et
- une étape de détermination des imperfections de la voie de réception à partir desdites deuxièmes amplitudes et deuxièmes phases.

Avantageusement moins deux des premières séquences analogiques sont non nulles, ne sont pas une version retardée l'une de l'autre et ne sont pas une version amplifiée l'une de l'autre.

Avantageusement une des premières séquences analogiques est constituée d'une séquence imaginaire et une autre des premières séquences est constituée d'une séquence réelle.

Avantageusement au moins deux des premières séquences analogiques sont des séquences multi-tons de type OFDM -Multiplexage par Division de Fréquence Orthogonale- ou de type SC-FDE -modulation monoporteuse Egalisation dans le Domaine Fréquentiel- ou de type FBMC -modulation Multi-porteuse à base de Bancs de Filtres- ou des séquences analogiques utilisant un préfixe cyclique et/ou post fixe cyclique.

Avantageusement les imperfections de la voie d'émission sont modélisées par un premier gain et un premier déphasage affectant ledit signal analogique lors de son émission par la voie d'émission.

Avantageusement les imperfections de la voie de réception sont modélisées par un deuxième gain et un deuxième déphasage affectant ledit signal analogique lors de sa réception par ladite voie de réception.

Avantageusement la voie d'émission comporte en outre un dispositif de conversion de premières séquences numériques vers lesdites premières séquences analogiques, et la voie de réception comporte en outre un dispositif de conversion desdites deuxièmes séquences analogiques vers des deuxièmes séquences numériques. De plus les premières fréquences d'intérêt sont :

$$f_8 = -k_2 \frac{f_{ech}}{Nfft} \text{ et}$$

$$f_9 = k_2 \frac{f_{ech}}{Nfft} = -f_8,$$

où :

$$k_2 \in \left[ +1; \frac{Nfft}{2} - 1 \right],$$

$f_{ech}$ représente la fréquence d'échantillonnage du dispositif de conversion des deuxièmes séquences analogiques vers des deuxièmes séquences numériques et Nfft représente un nombre d'échantillons utilisés pour calculer lesdites deuxièmes amplitudes et lesdites deuxièmes phases, desdites composantes spectrales de la ou les deuxièmes séquences analogiques.

Ainsi les fréquences d'intérêt ainsi que les fréquences émises sont définies par rapport à la fréquence d'échantillonnage de la voie de réception.

Avantageusement la voie d'émission comporte en outre un dispositif de conversion de premières séquences numériques vers lesdites premières séquences analogiques, et la voie de réception comporte en outre un dispositif de conversion desdites deuxièmes séquences analogiques vers des deuxièmes séquences numériques. De plus les premières fréquences d'intérêt sont :

$$f_1 = (-k_2 - k_1) \frac{f_{ech}}{Nfft},$$

$$f_2 = (-k_2 + k_1) \frac{f_{ech}}{Nfft},$$

$$f_6 = (+k_2 - k_1) \frac{f_{ech}}{Nfft} = -f_2,$$

$$f_7 = (+k_2 + k_1)\frac{f_{ech}}{Nfft} = -f_1,$$

où :

$$k_1 \in \left[-\frac{Nfft}{2} + 1; \frac{Nfft}{2}\right],$$

$$k_1 \frac{f_{ech}}{Nfft} = \Delta f,$$

$\Delta f$ représente la différence entre ladite première fréquence de transposition et ladite deuxième fréquence de transposition,

$$k_2 \in \left[+1; \frac{Nfft}{2} - 1\right],$$

$f_{ech}$ représente ladite fréquence d'échantillonnage du dispositif de conversion des deuxièmes séquences analogiques vers des deuxièmes séquences numériques et *Nfft* représente un nombre d'échantillons utilisés pour calculer lesdites deuxièmes amplitudes et lesdites deuxièmes phases, desdites composantes spectrales de la ou des deuxièmes séquences analogiques.

Avantageusement l'étape de détermination des imperfections de la voie d'émission comporte l'utilisation des relations suivantes :

$$\begin{cases} \varphi_{TX}est = Angle[K1_{TX}estfinale - K2_{TX}estfinale *] \\ g_{TX}est = |K1_{TX}estfinale - K2_{TX}estfinale *| \end{cases}$$

où :

$|\alpha|$ représente la norme du nombre complexe $\alpha$,
*Angle* $[\alpha]$ représente l'argument du nombre complexe $\alpha$,
$\varphi_{TX}$ représente une estimation dudit premier déphasage de ladite voie d'émission,
$g_{TX}$ représente une estimation dudit premier gain de ladite voie de réception,

$$K1_{TX}estfinale = \frac{K1_{TX}est1 + K1_{TX}est2}{2},$$

$$K2_{TX}estfinale = 1 - K1_{TX}estfinale^*,$$

* représente l'opérateur conjugué,

,

$$K1_{TX}est1 = \frac{R_{f_7}(seq_1) \cdot E_{f_8}*(seq_2) - \dfrac{R_{f_7}(seq_2)}{\exp(+j \cdot \varphi_{\Delta f})} \cdot E_{f_8}*(seq_2)}{R_{f_7}(seq_1) \cdot \left[E_{f_8}*(seq_2) - E_{f_9}(seq_2)\right] - \dfrac{R_{f_7}(seq_2)}{\exp(+j \cdot \varphi_{\Delta f})} \cdot \left[E_{f_8}*(seq_1) - E_{f_9}(seq_1)\right]}$$

$$K1_{TX}\,est2 = \frac{R_{f_2}(seq_1)\cdot E_{f_9}{}^*(seq_2) - \dfrac{R_{f_2}(seq_2)}{\exp(+j\cdot\varphi_{\Delta f})}\cdot E_{f_9}{}^*(seq_2)}{R_{f_2}(seq_1)\cdot\left[E_{f_9}{}^*(seq_2) - E_{f_8}(seq_2)\right] - \dfrac{R_{f_2}(seq_2)}{\exp(+j\cdot\varphi_{\Delta f})}\cdot\left[E_{f_9}{}^*(seq_1) - E_{f_8}(seq_1)\right]}$$

$E_{fj}(seq_i)$ représente une composante spectrale d'une desdites premières séquences $seq_i$ à la fréquence $f_j$,
$R_{fj}(seq_i)$ représente une composante spectrale d'une desdites deuxièmes séquences $seq_i$ à la fréquence $f_j$, et
$\varphi_{\Delta f}$ représente un déphasage provoqué par une différence entre ladite première fréquence de transposition et ladite deuxième fréquence de transposition.

Avantageusement l'étape de détermination desdites imperfections de ladite voie de réception comporte l'utilisation des relations suivantes :

$$\begin{cases}\varphi_{RX}est = Angle[K1_{RX}estfinale - K2_{RX}estfinale\,*]\\ g_{RX}est = |K1_{RX}est - K2_{RX}est\,*|\end{cases}$$

où :

$\varphi_{RX}$ représente une estimation dudit deuxième déphasage de ladite voie de réception,
$g_{RX}$ représente une estimation dudit deuxième gain de ladite voie de réception,

$$K1_{RX}estfinale = \frac{K1_{RX}est(seq_1)+[1-K2_{RX}^*est(seq_1)]+K1_{RX}est(seq_2)+[1-K2^*{}_{RX}est(seq_2)]}{4},$$

$$K2_{RX}estfinale = 1 - K1_{RX}estfinale^*,$$

* représente l'opérateur conjugué,

$$K1_{RX}\,est(seq_i) = \frac{R_{f_7}(seq_i)}{R_{f_7}(seq_i)+R_{f_1}{}^*(seq_i)},$$

$$K2_{RX}\,est(seq_i) = \frac{R_{f_6}(seq_i)}{R_{f_6}(seq_i)+R_{f_2}{}^*(seq_i)},$$

$R_{fj}(seq_i)$ représente une composante spectrale d'une desdites deuxièmes séquences $seq_i$ à la fréquence $f_j$.

Equipement, qui comprend une voie d'émission et une voie de réception. La voie d'émission comprend un premier dispositif de transposition en fréquence d'une séquence analogique vers un signal analogique, utilisant une première fréquence de transposition. La voie de réception comprend un deuxième dispositif de transposition en fréquence d'un signal analogique vers une séquence analogique, utilisant une deuxième fréquence de transposition. L'équipement comporte en outre un dispositif de calcul apte à mettre en oeuvre le procédé de l'invention

Avantageusement la voie d'émission comporte en outre un dispositif de conversion de premières séquences numériques vers lesdites premières séquences analogiques. De plus la voie de réception comporte en outre un dispositif de conversion des deuxièmes séquences analogiques vers des deuxièmes séquences numériques et le dispositif de calcul est en outre apte à mettre en oeuvre un procédé de l'invention.

L'invention sera mieux comprise et d'autres avantages apparaîtront à la lecture de la description détaillée faite à titre d'exemple non limitatif et à l'aide des figures parmi lesquelles :

- La figure 1 présente d'une voie d'émission présentant un déséquilibrage entre la voie I et la voie Q.
- La figure 2 présente d'une voie de réception présentant un déséquilibrage entre la voie I et la voie Q.
- La figure 3 présente une première illustration de l'effet du déséquilibrage entre la voie I et la voie Q d'une voie d'émission.
- La figure 4 présente une deuxième illustration de l'effet du déséquilibrage entre la voie I et la voie Q d'une voie de réception.
- La figure 5 présente un système comportant une pré-compensation et une post-compensation.

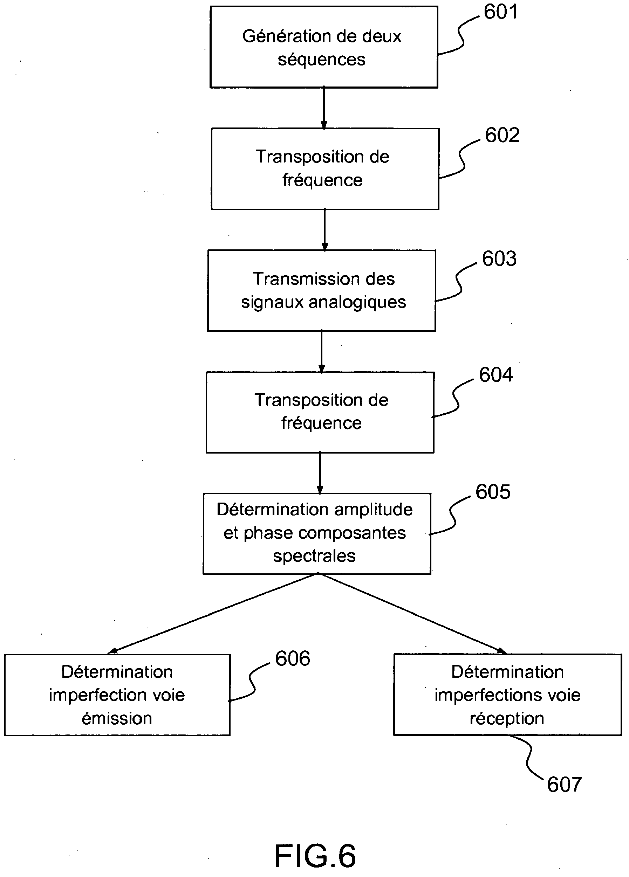

- La figure 6 présente le procédé décrit dans l'invention.

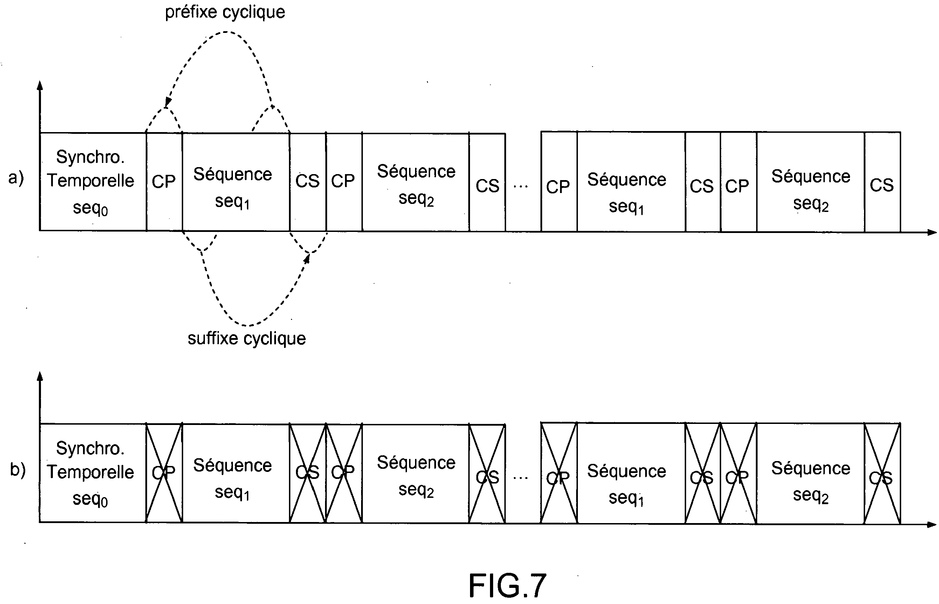

- La figure 7 présente un exemple de la séquence utilisée par le procédé de l'invention.

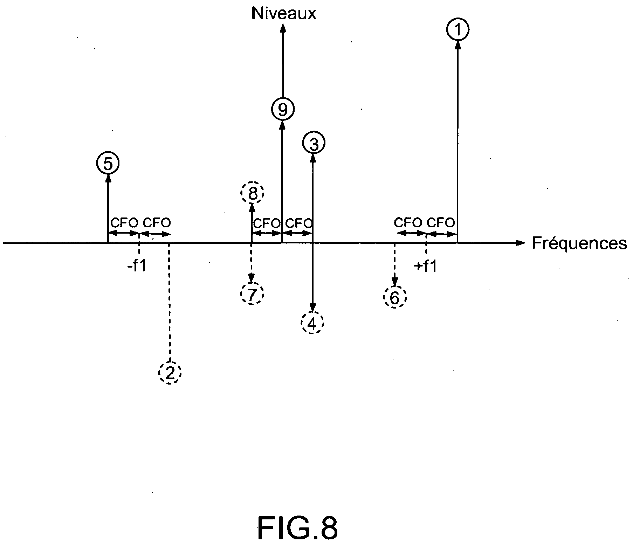

- La figure 8 présente les composantes spectrales des séquences reçues.

La figure 5 présente donc le système connu dans l'état de la technique et utilisé par le procédé de l'invention.

Dans le cadre de notre invention la deuxième fréquence de transposition est décalée d'une valeur connue de la première fréquence de transposition.

La valeur minimum de ce décalage dépend de la fréquence porteuse et de l'instabilité des valeurs de ces fréquences. Cette instabilité est généralement provoquée par une imprécision des oscillateurs locaux. Dans le cas d'un transmission UHF à 200MHz et d'un instabilité de 2 ppm des oscillateurs locaux, la valeur minimum du décalage serait d'environ 40 kHz. La valeur maximum de ce décalage dépend de la fréquences d'échantillonnages des convertisseurs numérique/analogique 506 et convertisseurs analogique/numérique 507. Dans le cas de convertisseurs ayant une fréquence de 80 MHz, la fréquence maximum serait d'environ 10 MHz.

Dans les conditions précédentes, une valeur typique serait de l'ordre d'1 MHz.

Le procédé selon l'invention est décrit figure 6 et comporte un ensemble d'étapes séquentielles.

Une étape 601 de génération d'au moins deux premières séquences analogiques différentes.

Les deux séquences analogiques doivent respecter les conditions suivantes pour que le procédé puisse fonctionner correctement :

- Ces deux séquences ne doivent pas être des séquences nulles.
- Une des séquences ne doit pas être une version amplifiée de l'autre séquence.
- Une des séquences ne doit pas être une version retardée de l'autre séquence.

Afin de réaliser cette estimation on peut par exemple utiliser un signal bi-tons dont les fréquences sont $f$ et -$f$. Les phases de ces séquences doivent être différentes pour chacune des deux premières séquences. Par exemple, on peut imaginer la transmission de deux premières séquences bi-tons. L'une de ces premières séquences est constituée d'une séquence uniquement réelle, et l'autre première séquence est constituée d'une séquence uniquement imaginaire. La séquence réelle est réalisable en utilisant la partie I de la voie d'émission et la séquence imaginaire est réalisable en utilisant la partie Q de la voie d'émission.

Il est aussi possible d'utiliser un signal de type multi-tons. Il est ainsi possible d'utiliser un signal de type OFDM (pour orthogonal frequency division multiplexing en anglais ou multiplexage par division en fréquences orthonales en français), SC-FDE (pour single-carrier frequency-domain-equalization en anglais ou modulation mono fréquence à égalisation dans le domaine fréquentiel), ou tout autre type de signaux avec préfixe cyclique. Il est aussi possible d'utiliser un signal de type FBMC (pour Filter Bank MultiCarrier en anglais ou signal multi-porteuse à banc de filtres en français).

Les séquence analogiques peuvent être d'abord générées en numérique puis le convertisseur numérique analogique 506 est utilisé pour générer les séquences analogiques à partir des séquences numériques.

Le procédé comporte ensuite une étape 602 de transposition en fréquence des séquences analogiques. Cette transposition est réalisée par la voie d'émission.

Ensuite une étape 603, de transmission des signaux analogiques de la voie d'émission vers la voie de réception, est réalisée.

L'étape 604 permet la transposition en fréquence des signaux analogiques reçus vers des deuxièmes séquences analogiques. Cette étape est réalisée par la voie de réception.

L'étape suivante est une étape 605 de calcul d'une première amplitude et d'une première phase, des composantes spectrales des premières séquences analogiques, associées à différentes fréquences d'intérêt.

Cette étape permet aussi le calcul d'une deuxième amplitude et d'une deuxième phase, des composantes spectrales des deuxièmes séquences analogiques, associées à différentes fréquences d'intérêt.

Cette étape peut aussi être réalisée après conversion des deuxièmes séquences analogiques vers des deuxièmes séquences numériques. Cette conversion est réalisée par les convertisseurs analogiques numériques 507 de la voie de réception.

Enfin le procédé comporte les deux étapes indépendantes suivantes ;

- une étape 606 de détermination des imperfections de la voie d'émission à partir uniquement des premières amplitudes, premières phases, deuxièmes amplitudes et deuxièmes phases associées aux fréquences d'intérêt, et
- une étape 607 de détermination des imperfections de la voie de réception à partir uniquement des deuxièmes amplitudes et deuxièmes phases associées aux fréquences d'intérêt.

Ces deux dernières étapes permettent donc la détermination de la valeur des imperfections de la voie d'émission et de la voie de réception. Ces imperfections sont caractérisées par les paramètres suivants :

Pour le modulateur IQ ou voie d'émission:

- le paramètre relatif à la perte de quadrature en phase,
- le paramètre relatif à la perte de quadrature en amplitude et,

Pour le démodulateur IQ ou voie de réception:

- le paramètre relatif à la perte de quadrature en phase,
- le paramètre relatif à la perte de quadrature en amplitude et,

Dans un mode de réalisation, présenté figure 7 les deux premières séquences sont réunies dans une même séquence plus longue dite séquence générale et composée de trois parties :

- Une première partie qui permet une synchronisation entre la voie d'émission et la voie de réception (Syncro Temporelle $seq_0$ sur la figure 7).
- Une seconde et troisième parties qui permettent l'estimation des paramètres représentatifs des imperfections des voies d'émission et de réception. Ces secondes et troisièmes parties comportent chacune une des premières séquences. (Séquence $seq_1$ et Séquence $seq_2$ sur la figure 7)

Notons qu'il est possible de répéter une partie de la seconde et la troisième partie du signal afin d'améliorer la finesse des estimations (CP pour Cyclic Prefix et CS pour Cyclic Suffix sur la figure 7). Ceci est réalisé par l'ajout d'un préfixe et/ou d'un post fixe cyclique.

De plus comme la fréquence porteuse du convertisseur d'émission est légèrement différente de la fréquence porteuse du convertisseur de réception, et grâce également à l'utilisation des parties deux et trois de la séquence générale, il est possible de séparer très facilement les paramètres à estimer, et une simple analyse spectrale permet de le faire. Notons qu'une analyse spectrale requiert en général le calcul d'une ou plusieurs transformées de Fourier, mais dans la méthode proposée ceci n'est pas nécessaire car les paramètres d'intérêt se situent à sept fréquences précises et connues à l'avance. Il suffit alors de déterminer la phase et l'amplitude des composantes spectrales associées à ces fréquences. Il est par exemple possible de multiplier la deuxième séquence reçue par la voie de réception par des exponentielles complexes dont les fréquences sont connues au préalable, pour déterminer la valeur de ces paramètres.

Les fréquences de transposition de la voie d'émission et de la voie de réception sont différentes. On note

$$\Delta f = k_1 \frac{f_{ech}}{Nfft} = \frac{\omega_{TX} - \omega_{RX}}{2\pi}$$ cette différence, avec $k_1 \in \left[ -\frac{Nfft}{2} + 1 ; \frac{Nfft}{2} \right]$ qui est une fréquence normalisée et entière, tout en respectant la condition $|k_1| + |k_2| \leq \frac{Nfft}{2} - 1$.

Dans le cas d'un signal bi-tons les deux fréquences sont alors les fréquences suivantes :

$$f_8 = -k_2 \frac{f_{ech}}{Nfft}$$

et

$$f_9 = k_2 \frac{f_{ech}}{Nfft}.$$

avec

$$k_2 \in \left[+1; \frac{Nfft}{2} - 1\right]$$

$f_{ech}$ représente la fréquence d'échantillonage du signal analogique par le dispositif de conversion de la voie de réception.

$\omega_{TX}$ représente la pulsation du dispositif de transposition de la voie d'émission.

$\omega_{RX}$ représente la pulsation du dispositif de transposition de la voie de réception.

$Nfft$ représente la taille du bloc d'échantillons utilisé pour calculer les deuxièmes amplitudes et deuxièmes phases, du spectre des deuxièmes séquences analogiques.

Les fréquences d'intérêt ainsi que les fréquences émises sont définies par rapport à la fréquence d'échantillonnage de la voie de réception.

Dans un mode de réalisation les deux étapes 606 et 607 de détermination des imperfections de la voie d'émission et de réception utilisent la modélisation du signal analogique reçu par la voix de réception $r(t)$ suivante :

$$\begin{aligned}
r(t) = \quad & \left(h(t) \otimes \left[[e(t) + DC_{TX}(t)] \cdot K1_{TX} \cdot K1_{RX} + [e(t) + DC_{TX}(t)]^* \cdot K2_{TX}^* \cdot K1_{RX}\right]\right) \cdot \exp\left(+ j2\pi\Delta_f t\right) \\
& + \left(h^*(t) \otimes \left[[e(t) + DC_{TX}(t)]^* \cdot K1_{TX}^* \cdot K2_{RX} + [e(t) + DC_{TX}(t)] \cdot K2_{TX} \cdot K2_{RX}\right]\right) \cdot \exp\left(- j2\pi\Delta_f t\right) \\
& + DC_{RX}(t)
\end{aligned}$$

h(t) représente la réponse impusionnelle du commutateur (ou de l'association des éléments de la voie d'émission du canal de propagation et des éléments de la voie de réception) 503 reliant la voie d'émission et la voie de réception.

e(t) représente le signal qui a été transmis par la voie d'émission.

$DC_{RX}(t)$ représente le signal analogique équivalent correspondant à la composante continue non désirée dans la voie de réception.

$DC_{TX}(t)$ représente le signal analogique équivalent correspondant à la composante continue non désirée dans la voie d'émission.

$K1_{TX}(t)$ et $K2_{TX}(t)$ dépendent des coefficients du modèle de déséquilibre de la voie d'émission.

$$K1_{TX}(t) = \frac{1 + g_{Tx}e^{+j\varphi_{Tx}}}{2}$$

$$K2_{TX}(t) = \frac{1 - g_{Tx}e^{-j\varphi_{Tx}}}{2}$$

$K1_{RX}(t)$ et $K2_{RX}(t)$ dépendent des coefficients du modèle de déséquilibre de la voie de réception.

$$K1_{RX}(t) = \frac{1 + g_{Rx}e^{-j\varphi_{Rx}}}{2}$$

$$K2_{RX}(t) = \frac{1 - g_{Rx}e^{+j\varphi_{Rx}}}{2}$$

$\otimes$ représente une convolution.

* représente l'opérateur conjugué.

La transformée de Fourier discrète, ou plus simplement une analyse spectrale menée sur certaines des composantes spectrales, du signal reçu r(t), constitué des deuxièmes séquences, permet de récupérer l'information portée aux sept fréquences suivantes :

$$f_1 = (-k_2 - k_1)\frac{f_{ech}}{Nfft},$$

$$f_2 = (-k_2 + k_1)\frac{f_{ech}}{Nfft},$$

$$f_3 = -k_1\frac{f_{ech}}{Nfft},$$

$$f_4 = 0,$$

$$f_5 = +k_1\frac{f_{ech}}{Nfft},$$

$$f_6 = (+k_2 - k_1)\frac{f_{ech}}{Nfft}$$

et

$$f_7 = (+k_2 + k_1)\frac{f_{ech}}{Nfft}.$$

Les composantes spectrales du signal reçu pour ces sept fréquences dépendent des composantes spectrales du signal émis et de la réponse en fréquence du commutateur reliant la voie d'émission et la voie de réception aux fréquences $f_8 = -k_2\frac{f_{ech}}{Nfft}$ et $f_9 = k_2\frac{f_{ech}}{Nfft}$.

Ainsi des composantes spectrales des deux deuxièmes séquences à ces sept fréquence permettent d'obtenir le système suivant :

$$
\begin{cases}
R_{f_1}(seq_i) = \left[ E_{f_9}*(seq_i) \cdot K1_{TX}* + E_{f_8}(seq_i) \cdot K2_{TX} \right] \cdot K2_{RX} \cdot H_{f_9}*(seq_i) \\
R_{f_2}(seq_i) = \left[ E_{-k_2}(seq_i) \cdot K1_{TX} + E_{f_9}*(seq_i) \cdot K2_{TX}* \right] \cdot K1_{RX} \cdot H_{f_8}(seq_i) \\
R_{f_3}(seq_i) = \left[ DC_{TX}*(seq_i) \cdot K1_{TX}* + DC_{TX}(seq_i) \cdot K2_{TX} \right] \cdot K2_{RX} \cdot H_0*(seq_i) \\
R_{f_4}(seq_i) = DC_{RX}(seq_i) \\
R_{f_5}(seq_i) = \left[ DC_{TX}(seq_i) \cdot K1_{TX} + DC_{TX}*(seq_i) \cdot K2_{TX}* \right] \cdot K1_{RX} \cdot H_0(seq_i) \\
R_{f_6}(seq_i) = \left[ E_{f_8}*(seq_i) \cdot K1_{TX}* + E_{f_9}(seq_i) \cdot K2_{TX} \right] \cdot K2_{RX} \cdot H_{f_8}*(seq_i) \\
R_{f_7}(seq_i) = \left[ E_{f_9}(seq_i) \cdot K1_{TX} + E_{f_8}*(seq_i) \cdot K2_{TX}* \right] \cdot K1_{RX} \cdot H_{f_9}(seq_i)
\end{cases}
$$

$H_{f_j}(seq_i)$ représente une composante spectrale de la réponse en fréquence du commutateur reliant la voie d'émission et la voie de réception à la fréquence $f_j$ et pendant la transmission de la séquence $seq_i$.

$E_{f_j}(seq_i)$ représente une composante spectrale d'une des premières séquences émises ($seq_i$) à la fréquence $f_j$.

$R_{f_j}(seq_i)$ représente une composante spectrale d'une des deuxièmes séquences reçue ($seq_i$) à la fréquence $f_j$.

$$f_8 = -k_2 \frac{fech}{Nfft} \text{ et } f_9 = k_2 \frac{fech}{Nfft}.$$

Afin de déterminer le déséquilibre IQ du convertisseur d'émission on utilise les composantes spectrales des deuxièmes séquences reçues $seq_1$ et $seq_2$ à la fréquence $f_7 = (+k_2 + k_1)\frac{fech}{Nfft}$. On forme alors le système suivant :

$$\begin{cases} R_{f_7}(seq_1) &= \left[ E_{f_9}(seq_1) \cdot K1_{TX} + E_{f_8} *(seq_1) \cdot K2_{TX} * \right] \cdot K1_{RX} \cdot H_{f_9}(seq_1) \\ R_{f_7}(seq_2) &= \left[ E_{f_9}(seq_2) \cdot K1_{TX} + E_{f_8} *(seq_2) \cdot K2_{TX} * \right] \cdot K1_{RX} \cdot H_{f_9}(seq_2) \end{cases}$$

Les réponses en fréquences du canal équivalent $H_k(seq_1)$ et $H_k(seq_2)$ ne sont pas identiques, car les fréquences de transposition de la voie d'émission et de la voie de réception sont différentes. En effet, la séquence reçue à la sortie du convertisseur de réception ne se situe pas sur fréquence nulle, mais à une fréquence $\Delta f = k_1 \frac{fech}{Nfft} = \frac{\omega_{TX} - \omega_{RX}}{2\pi} = f_5$. Ceci est particulièrement présenté figure 8. Sur cette figure est présenté le spectre du signal reçu lorsque le signal émis est une exponentielle pure de fréquence $+f_5$ et d'amplitude A. CFO représente le décalage en fréquence entre le convertisseur de la voie d'émission et le convertisseur de la voie de réception.

Ce décalage fréquentiel implique une rotation de phase $\varphi_{\Delta f}$ entre les séquences $seq_1$ et $seq_2$ :

$$\varphi_{\Delta f} = 2\pi \cdot k_1 \cdot \frac{Nfft + N_{CP} + N_{CS}}{Nfft}$$

Ainsi la relation entre les réponses en fréquence des canaux équivalents des séquences $seq_1$ et $seq_2$ est la suivante :

$$H_{f_j}(seq_2) = H_{f_j}(seq_1).e^{+i\varphi_{\Delta f}}$$

Le précédent système peut alors se réécrire sous cette forme :

$$\begin{cases} R_{f_7}(seq_1) &= \left[ E_{f_9}(seq_1) \cdot K1_{TX} + E_{f_8} *(seq_1) \cdot K2_{TX} * \right] \cdot K1_{RX} \cdot H_{f_9}(seq_1) \\ R_{f_7}(seq_2) &= \left[ E_{f_9}(seq_2) \cdot K1_{TX} + E_{f_8} *(seq_2) \cdot K2_{TX} * \right] \cdot K1_{RX} \cdot H_{f_9}(seq_1) \cdot \exp(+ j \cdot \varphi_{\Delta f}) \end{cases}$$

On pose alors les variables intermédiaires suivantes :

$$\begin{cases} A_{f_9} & = & K1_{TX} \cdot K1_{RX} \cdot H_{f_9}(seq_1) \\ B_{f_9} & = & K2_{TX} * \cdot K1_{RX} \cdot H_{f_9}(seq_1) \end{cases}$$

La transformée de Fourier des deux deuxièmes séquences reçues $seq_1$ et $seq_2$ se réécrivent alors sous la forme d'un système de deux équations à deux inconnues $A_{f9}$ et $B_{f9}$ :

$$\begin{cases} R_{f_7}(seq_1) & = & E_{f_9}(seq_1) \cdot A_{k_2} + E_{f_8}*(seq_1) \cdot B_{f_9} \\ \dfrac{R_{f_7}(seq_2)}{\exp(+j \cdot \varphi_{\Delta f})} & = & E_{f_9}(seq_2) \cdot A_{k_2} + E_{f_8}*(seq_2) \cdot B_{f_9} \end{cases}$$

Ce système possède une solution unique si

$$\frac{E_{f_9}{}'(seq_1)}{E_{f_8}*(seq_1)} \neq \frac{E_{f_9}(seq_2)}{E_{f_8}*(seq_2)}.$$

En d'autres termes, une solution existe si les conditions suivantes sont réunies :

$seq_1 \neq 0$ et $seq_2 \neq 0$.
$seq_1$ n'est pas une version retardée de $seq_2$.
$seq_1$ n'est pas une version amplifiée ou atténuée de $seq_2$.

La solution à ce système est alors :

$$\begin{cases} A_{f_9} & = & \dfrac{R_{f_7}(seq_1) \cdot E_{f_8}*(seq_2) - \dfrac{R_{f_7}(seq_2)}{\exp(+j \cdot \varphi_{\Delta f})} \cdot E_{f_8}*(seq_2)}{E_{f_8}*(seq_2)E_{f_9}(seq_1) - E_{f_9}*(seq_2)E_{f_8}*(seq_1)} \\[4ex] B_{f_9} & = & \dfrac{\dfrac{R_{f_7}(seq_2)}{\exp(+j \cdot \varphi_{\Delta f})} \cdot E_{f_9}(seq_1) - R_{f_7}(seq_1) \cdot E_{f_9}*(seq_2)}{E_{f_8}*(seq_2)E_{f_9}(seq_1) - E_{f_9}*(seq_2)E_{f_8}*(seq_1)} \end{cases}$$

En utilisant le fait que $K1_{TX}(t) + K2_{TX}^*(t) = 1$, on constate que $K1_{TX}$ peut être estimé à partir de la connaissance de $A_{f9}$ et $B_{f9}$ de la manière suivante :

$$K1_{TX}est1 = \frac{A_{f_9}}{A_{f_9} + B_{f_9}}$$

Enfin, la version développée de la précédente équation est :

$$K1_{TX}\,est1 = \frac{R_{f_7}(seq_1)\cdot E_{f_8}{}^{*}(seq_2) - \dfrac{R_{f_7}(seq_2)}{\exp(+j\cdot\varphi_{\Delta f})}\cdot E_{f_8}{}^{*}(seq_2)}{R_{f_7}(seq_1)\cdot\left[E_{f_8}{}^{*}(seq_2) - E_{f_9}(seq_2)\right] - \dfrac{R_{f_7}(seq_2)}{\exp(+j\cdot\varphi_{\Delta f})}\cdot\left[E_{f_8}{}^{*}(seq_1) - E_{f_9}(seq_1)\right]}$$

On peut aussi appliquer la même méthode aux fréquences :

$$f_1 = (-k_2 - k_1)\frac{f_{ech}}{Nfft},$$

$$f_2 = (-k_2 + k_1)\frac{f_{ech}}{Nfft},$$

et

$$f_6 = (+k_2 - k_1)\frac{f_{ech}}{Nfft}.$$

pour estimer $K1_{TX}$ en utilisant un autre mode de réalisation. Cependant, les estimations réalisées sur les fréquences $f_6 = (+k_2 - k_1)\frac{f_{ech}}{Nfft}$ et $f_1 = (-k_2 - k_1)\frac{f_{ech}}{Nfft}$ s'avèrent peu fiables et ne seront pas utilisées car les niveaux de puissance reçue à ces fréquences sont trop faibles.

L'estimation de $K1_{TX}$ appliquée à la fréquence $f_2 = (-k_2 + k_1)\frac{f_{ech}}{Nfft}$ est la suivante :

$$K1_{TX}\,est2 = \frac{R_{f_2}(seq_1)\cdot E_{f_9}{}^{*}(seq_2) - \dfrac{R_{f_2}(seq_2)}{\exp(+j\cdot\varphi_{\Delta f})}\cdot E_{f_9}{}^{*}(seq_2)}{R_{f_2}(seq_1)\cdot\left[E_{f_9}{}^{*}(seq_2) - E_{f_8}(seq_2)\right] - \dfrac{R_{f_2}(seq_2)}{\exp(+j\cdot\varphi_{\Delta f})}\cdot\left[E_{f_9}{}^{*}(seq_1) - E_{f_8}(seq_1)\right]}$$

En tirant profit du fait que l'on a à disposition deux estimées du déséquilibre IQ du convertisseur d'émission, l'estimation finale est la suivante :

$$K1_{TX}estfinale = \frac{K1_{TX}est1 + K1_{TX}est2}{2}$$

Et

$$K2_{TX}estfinale = 1 - K1_{TX}estfinale^{*}$$

On détermine alors les estimations de la première phase $\varphi_{TX}$ et du premier gain $g_{TX}$ des imperfections du convertisseur d'émission, qui sont réalisées en utilisant les formules suivantes :

$$\begin{cases} \varphi_{TX}est = +Angle[K1_{TX}estfinale - K2_{TX}estfinale *] \\ g_{TX}est = |K1_{TX}estfinale - K2_{TX}estfinale *| \end{cases}$$

Ainsi cette estimation des paramètres des imperfections de la voie d'émission est réalisée en utilisant les composantes spectrales des premières séquences aux premières fréquences d'intérêt suivantes :

$$f_8 = -k_2 \frac{f_{ech}}{Nfft}$$

et

$$f_9 = k_2 \frac{f_{ech}}{Nfft}.$$

Et les composantes spectrales des deuxièmes séquences aux deuxièmes fréquences d'intérêt suivantes :

$$f_2 = (-k_2 + k_1)\frac{f_{ech}}{Nfft},$$

$$f_7 = (+k_2 + k_1)\frac{f_{ech}}{Nfft},$$

L'utilisation d'un signal multi-tons à la place d'un signal bi-tons permet de fiabiliser l'estimation du déséquilibre IQ en moyennant les estimations sur l'ensemble des paires de sous-porteuses de la manière suivante :

$$K1_{TX}\,est1 = \sum_{p=1}^{P} \frac{R_{(+K_p+k_1)}(seq_1)\cdot E_{-K_p}*(seq_2) - \frac{R_{(+K_p+k_1)}(seq_2)}{\exp(+j\cdot\varphi_{\Delta f})}\cdot E_{-K_p}*(seq_2)}{R_{(+K_p+k_1)}(seq_1)\cdot\left[E_{-K_p}*(seq_2) - E_{+K_p}(seq_2)\right] - \frac{R_{(+K_p+k_1)}(seq_2)}{\exp(+j\cdot\varphi_{\Delta f})}\cdot\left[E_{-K_p}*(seq_1) - E_{+K_p}(seq_1)\right]}$$

et

$$K1_{TX}\,est2 = \sum_{p=1}^{P} \frac{R_{(-K_p+k_1)}(seq_1)\cdot E_{+K_p}*(seq_2) - \frac{R_{(-K_p+k_1)}(seq_2)}{\exp(+j\cdot\varphi_{\Delta f})}\cdot E_{+K_p}*(seq_2)}{R_{(-K_p+k_1)}(seq_1)\cdot\left[E_{+K_p}*(seq_2) - E_{-K_p}(seq_2)\right] - \frac{R_{(-K_p+k_1)}(seq_2)}{\exp(+j\cdot\varphi_{\Delta f})}\cdot\left[E_{+K_p}*(seq_1) - E_{-K_p}(seq_1)\right]}$$

Dans ces équations P est l'ensemble des paires de sous porteuses utilisées pour faire l'apprentissage. Dans le cas d'un signal Bi tons P=1, dans le cas d'un signal multi tons (plus que 2 tons) P=Nombre de tons/2. $K_P$ correspond aux fréquences du signal multi tons à 2P tons.

L'estimation du déséquilibre IQ de la voie réception est réalisée via les signaux reçus aux fréquences jumelles suivantes :

$$f_1 = (-k_2 - k_1)\frac{f_{ech}}{Nfft},$$

et

$$f_7 = (+k_2 + k_1)\frac{f_{ech}}{Nfft}.$$

On peut alors déterminer, l'équation suivante, afin de s'affranchir de la contribution du déséquilibre IQ de la voie d'émission :

$$
\begin{aligned}
R_{f_7}(seq_i) + R_{f_1}{}^*(seq_i) &= \left[ E_{f_9}(seq_i) \cdot K1_{TX} + E_{f_8}{}^*(seq_i) \cdot K2_{TX}{}^* \right] \cdot K1_{RX} \cdot H_{f_9}(seq_i) \\
&\quad + \left[ E_{f_9}(seq_i) \cdot K1_{TX} + E_{f_8}{}^*(seq_i) \cdot K2_{TX}{}^* \right] \cdot K2_{RX}{}^* \cdot H_{f_9}(seq_i) \\
&= \left[ E_{f_9}(seq_i) \cdot K1_{TX} + E_{f_8}{}^*(seq_i) \cdot K2_{TX}{}^* \right] \cdot H_{f_9}(seq_i) \cdot \left[ K1_{RX} + K2_{RX}{}^* \right] \\
&= \left[ E_{f_9}(seq_i) \cdot K1_{TX} + E_{f_8}{}^*(seq_i) \cdot K2_{TX}{}^* \right] \cdot H_{f_9}(seq_i)
\end{aligned}
$$

Ainsi, $K1_{RX}$ peut être directement estimé grâce à la formulation suivante :

$$K1_{RX}\,est(seq_i) = \frac{R_{f_7}(seq_i)}{R_{f_7}(seq_i) + R_{f_1}{}^*(seq_i)}$$

On peut noter que la transformée de Fourier des séquences aux fréquences suivantes :

$$f_2 = (-k_2 + k_1)\frac{f_{ech}}{Nfft},$$

et

$$f_6 = (+k_2 - k_1)\frac{f_{ech}}{Nfft}.$$

possèdent la même propriété :

$$
\begin{aligned}
R_{f_6}(seq_i) + R_{f_2}{}^*(seq_i) &= \left[ E_{f_8}{}^*(seq_i) \cdot K1_{TX}{}^* + E_{f_9}(seq_i) \cdot K2_{TX} \right] \cdot K2_{RX} \cdot H_{f_8}{}^*(seq_i) \\
&\quad + \left[ E_{f_8}{}^*(seq_i) \cdot K1_{TX}{}^* + E_{f_9}(seq_i) \cdot K2_{TX} \right] \cdot K1_{RX}{}^* \cdot H_{f_8}{}^*(seq_i) \\
&= \left[ E_{f_8}{}^*(seq_i) \cdot K1_{TX}{}^* + E_{f_9}(seq_i) \cdot K2_{TX} \right] \cdot H_{f_9}{}^*(seq_i) \cdot \left[ K1_{RX}{}^* + K2_{RX} \right] \\
&= \left[ E_{f_8}{}^*(seq_i) \cdot K1_{TX}{}^* + E_{f_9}(seq_i) \cdot K2_{TX} \right] \cdot H_{f_9}{}^*(seq_i)
\end{aligned}
$$

Et de la même manière que précédemment, $K2_{RX}$ peut être directement estimé grâce à la formulation suivante :

$$K2_{RX}est(seq_i) = \frac{R_{f_6}(seq_i)}{R_{f_6}(seq_i) + R_{f_2}*(seq_i)}$$

Puisqu'aucune condition n'est requise sur la valeur des signaux bi-tons à transmettre $E_{f9(seqi)}$ et $E_{f8(seqi)}$ (mise à part les valeurs nulles), le déséquilibre IQ de la voie de réception peut donc être estimé à la fois sur la séquence $seq_1$ et $seq_2$.

Finalement, il est possible de tirer profit du fait que l'on a à disposition 4 estimées du déséquilibre IQ de la voie de réception en les consolidant de la manière suivante :

$$K1_{RX}estfinale = \frac{K1_{RX}est(seq_1) + [1 - K2^*_{RX}est(seq_1)] + K1_{RX}est(seq_2) + [1 - K2^*_{RX}est(seq_2)]}{4}$$

Et

$$K2_{RX}estfinale = 1 - K1_{RX}estfinale^*$$

On détermine alors l'estimation de la phase $\varphi_{TX}$ et de gain $g_{TX}$ des imperfections du convertisseur de réception, qui sont réalisés en utilisant les formules suivantes :

$$\begin{cases} \varphi_{RX}est = +Angle[K1_{RX}estfinale - K2_{RX}estfinale *] \\ g_{RX}est = |K1_{RX}est - K2_{RX}est *| \end{cases}$$

Ainsi cette estimation des paramètres des imperfections de la voie de réception est réalisée en utilisant les composantes spectrales des premières séquences aux premières fréquences d'intérêt suivantes :

$$f_8 = -k_2 \frac{f_{ech}}{Nfft}$$

et

$$f_9 = k_2 \frac{f_{ech}}{Nfft}.$$

Et les composantes spectrales des deuxièmes séquences aux deuxièmes fréquences d'intérêt suivantes :

$$f_1 = (-k_2 - k_1)\frac{f_{ech}}{Nfft},$$

$$f_7 = (+k_2 + k_1)\frac{f_{ech}}{Nfft},$$

L'utilisation d'un signal multi-tons à la place d'un signal bi-tons permet de fiabiliser l'estimation du déséquilibre IQ du convertisseur de réception en moyennant les estimations sur l'ensemble des paires de sous-porteuses de la manière suivante :

$$K1_{RX}\,est(seq_i) = \sum_{p=1}^{P} \frac{R_{(+K_p+k_1)}(seq_i)}{R_{(+K_p+k_1)}(seq_i) + R_{(-K_p-k_1)}*(seq_i)}$$

et

$$K2_{RX}\,est(seq_i) = \sum_{p=1}^{P} \frac{R_{(+K_p-k_1)}(seq_i)}{R_{(+K_p-k_1)}(seq_i) + R_{(-K_p+k_1)f}*(seq_i)}$$

**Revendications**

1. Procédé de détermination des imperfections d'une voie d'émission (501) et d'une voie de réception (502) d'un équipement,
ladite voie d'émission comprenant un premier dispositif (504) de transposition en fréquence d'une séquence analogique vers un signal analogique, utilisant une première fréquence de transposition,
ladite voie de réception comprenant un deuxième dispositif (505) de transposition en fréquence d'un signal analogique vers une séquence analogique, utilisant une deuxième fréquence de transposition différente de ladite première fréquence de transposition,
ledit procédé comportant les étapes séquentielles suivantes:

   • une étape (601) de génération d'au moins deux premières séquences analogiques différentes,
   • une étape (602) de transposition en fréquence vers des signaux analogiques desdites premières séquences analogiques, par ladite voie d'émission,
   • une étape (603) de transmission des signaux analogiques de ladite voie d'émission à ladite voie de réception,
   • une étape (604) de transposition en fréquence vers des deuxièmes séquences analogiques desdits signaux analogiques reçus, par ladite voie de réception,
   • une étape (605) de calcul de premières amplitudes et de premières phases, d'une pluralité de composantes spectrales d'au moins deux des premières séquences analogiques à des premières fréquences d'intérêt et de deuxièmes amplitudes et de deuxièmes phases, d'une pluralité de composantes spectrales d'au moins deux des deuxièmes séquences analogiques à des premières fréquences d'intérêt,

   ledit procédé étant **caractérisé en ce qu'**il comporte au moins une des deux étapes indépendantes suivantes :

   • une étape (606) de détermination desdites imperfections de ladite voie d'émission à partir uniquement des premières amplitudes, premières phases, deuxièmes amplitudes et deuxièmes phases, et
   • une étape (607) de détermination desdites imperfections de ladite voie de réception à partir uniquement desdites deuxièmes amplitudes et deuxièmes phases.

2. Procédé selon la revendication 1 dans lequel au moins deux desdites premières séquences analogiques sont non nulles, ne sont pas une version retardée l'une de l'autre et ne sont pas une version amplifiée l'une de l'autre.

3. Procédé selon la revendication 1 dans lequel une des premières séquences analogiques est constituée d'une séquence imaginaire et une autre des premières séquences est constituée d'une séquence réelle.

4. Procédé selon la revendication 1 dans lequel au moins deux desdites premières séquences analogiques sont des séquences multi-tons de type OFDM -Multiplexage par Division de Fréquence Orthogonale- ou de type SC-FDE -modulation monoporteuse Egalisation dans le Domaine Fréquentiel- ou de type FBMC -modulation Multi-porteuse à base de Bancs de Filtres- ou des séquences analogiques utilisant un préfixe cyclique et/ou post fixe cyclique.

5. Procédé selon l'une des revendications 1 à 4 dans laquelle lesdites imperfections de ladite voie d'émission sont modélisées par un premier gain et un premier déphasage affectant ledit signal analogique lors de son émission par ladite voie d'émission.

**6.** Procédé selon l'une des revendications 1 à 5 dans laquelle lesdites imperfections de ladite voie de réception sont modélisées par un deuxième gain et un deuxième déphasage affectant ledit signal analogique lors de sa réception par ladite voie de réception.

**7.** Procédé selon l'une des revendications 1 à 6 dans lequel ladite voie d'émission comporte en outre un dispositif (506) de conversion de premières séquences numériques vers lesdites premières séquences analogiques,
ladite voie de réception comporte en outre un dispositif (507) de conversion desdites deuxièmes séquences analogiques vers des deuxièmes séquences numériques,
lesdites premières fréquences d'intérêt sont :

$$f_8 = -k_2 \frac{f_{ech}}{Nfft}$$

et

$$f_9 = k_2 \frac{f_{ech}}{Nfft} = -f_8.$$

où :

$$k_2 \in \left[ +1; \frac{Nfft}{2} - 1 \right],$$

$f_{ech}$ représente une fréquence d'échantillonnage dudit dispositif de conversion desdites deuxièmes séquences analogiques vers lesdites deuxièmes séquences numériques et
$Nfft$ représente un nombre d'échantillons utilisés pour calculer lesdites deuxièmes amplitudes et lesdites deuxièmes phases, desdites composantes spectrales de la ou des deuxièmes séquences analogiques.

**8.** Procédé selon l'une des revendications 1 à 7 dans lequel ladite voie d'émission comporte en outre un dispositif (506) de conversion de premières séquences numériques vers lesdites premières séquences analogiques,
ladite voie de réception comporte en outre un dispositif (507) de conversion desdites deuxièmes séquences analogiques vers des deuxièmes séquences numériques,
lesdites deuxièmes fréquences d'intérêt sont :

$$f_1 = (-k_2 - k_1) \frac{f_{ech}}{Nfft},$$

$$f_2 = (-k_2 + k_1) \frac{f_{ech}}{Nfft},$$

$$f_6 = (+k_2 - k_1) \frac{f_{ech}}{Nfft} = -f_2,$$

$$f_7 = (+k_2 + k_1) \frac{f_{ech}}{Nfft} = -f_1,$$

où :

$$k_1 \in \left[ -\frac{Nfft}{2} + 1; \frac{Nfft}{2} \right],$$

$$k_1 \frac{f_{ech}}{Nfft} = \Delta f,$$

$\Delta f$ représente la différence entre ladite première fréquence de transposition et ladite deuxième fréquence de transposition,

$$k_2 \in \left[+1; \frac{Nfft}{2} - 1\right],$$

$f_{ech}$ représente ladite fréquence d'échantillonnage dudit dispositif de conversion desdites deuxièmes séquences analogiques vers lesdites deuxièmes séquences numériques et

$Nfft$ représente un nombre d'échantillons utilisés pour calculer lesdites deuxièmes amplitudes et lesdites deuxièmes phases, desdites composantes spectrales de la ou des deuxièmes séquences analogiques.

9. Procédé selon les revendications 5, 7 et 8 dans lequel ladite étape (606) de détermination desdites imperfections de ladite voie d'émission comporte l'utilisation des relations suivantes :

$$\begin{cases} \varphi_{TX}est = Angle[K1_{TX}estfinale - K2_{TX}estfinale *] \\ g_{TX}est = |K1_{TX}estfinale - K2_{TX}estfinale *| \end{cases}$$

où :

$\varphi_{TX}$ représente une estimation dudit premier déphasage de ladite voie d'émission,

$g_{TX}$ représente une estimation dudit premier gain de ladite voie de réception,

$$K1_{TX}estfinale = \frac{K1_{TX}est1 + K1_{TX}est2}{2},$$

$$K2_{TX}estfinale = 1 - K1_{TX}estfinale^*,$$

* représente l'opérateur conjugué,

$$K1_{TX}est1 = \frac{R_{f_7}(seq_1) \cdot E_{f_8}*(seq_2) - \dfrac{R_{f_7}(seq_2)}{\exp(+j \cdot \varphi_{\Delta f})} \cdot E_{f_8}*(seq_2)}{R_{f_7}(seq_1) \cdot \left[E_{f_8}*(seq_2) - E_{f_9}(seq_2)\right] - \dfrac{R_{f_7}(seq_2)}{\exp(+j \cdot \varphi_{\Delta f})} \cdot \left[E_{f_8}*(seq_1) - E_{f_9}(seq_1)\right]}$$

$$K1_{TX}est2 = \frac{R_{f_2}(seq_1) \cdot E_{f_9}*(seq_2) - \dfrac{R_{f_2}(seq_2)}{\exp(+j \cdot \varphi_{\Delta f})} \cdot E_{f_9}*(seq_2)}{R_{f_2}(seq_1) \cdot \left[E_{f_9}*(seq_2) - E_{f_8}(seq_2)\right] - \dfrac{R_{f_2}(seq_2)}{\exp(+j \cdot \varphi_{\Delta f})} \cdot \left[E_{f_9}*(seq_1) - E_{f_8}(seq_1)\right]}$$

$E_{f_j}(seq_i)$ représente une composante spectrale d'une desdites premières séquences $seq_i$ à la fréquence $f_j$,

$R_{f_j}(seq_i)$ représente une composante spectrale d'une desdites deuxièmes séquences $seq_i$ à la fréquence $f_j$, et $\varphi_{\Delta f}$ représente un déphasage provoqué par une différence entre ladite première fréquence de transposition et ladite deuxième fréquence de transposition.

10. Procédé selon les revendications 6 à 9 dans lequel ladite étape (607) de détermination desdites imperfections de ladite voie de réception comporte l'utilisation des relations suivantes :

$$\begin{cases} \varphi_{RX}est = Angle[K1_{RX}estfinale - K2_{RX}estfinale *] \\ g_{RX}est = |K1_{RX}est - K2_{RX}est *| \end{cases}$$

où :

$\varphi_{RX}$ représente une estimation dudit deuxième déphasage de ladite voie de réception,
$g_{RX}$ représente une estimation dudit deuxième gain de ladite voie de réception,

$$K1_{RX}estfinale = \frac{K1_{RX}est(seq_1)+[1-K2^*_{RX}est(seq_1)]+K1_{RX}est(seq_2)+[1-K2^*_{RX}est(seq_2)]}{4},$$

$K2_{RX}\,est\,finale = 1 - K1_{RX}\,est\,finale*$,
* représente l'opérateur conjugué,

$$K1_{RX}\,est(seq_i) = \frac{R_{f_7}(seq_i)}{R_{f_7}(seq_i)+R_{f_1}*(seq_i)},$$

$$K2_{RX}\,est(seq_i) = \frac{R_{f_6}(seq_i)}{R_{f_6}(seq_i)+R_{f_2}*(seq_i)},$$

$R_{f_j}(seq_i)$ représente une composante spectrale d'une desdites deuxièmes séquences $seq_i$ à la fréquence $f_j$.

11. Equipement, comprenant une voie d'émission et une voie de réception, ladite voie d'émission comprenant un premier dispositif (504) de transposition en fréquence d'une séquence analogique vers un signal analogique, utilisant une première fréquence de transposition,
ladite voie de réception comprenant un deuxième dispositif (505) de transposition en fréquence d'un signal analogique vers une séquence analogique, utilisant une deuxième fréquence de transposition,
ledit équipement comportant en outre un dispositif de calcul apte à mettre en oeuvre le procédé selon l'une des revendications 1 à 6.

12. Equipement de transmission radio selon la revendication 11 dans lequel, ladite voie d'émission comporte en outre un dispositif (506) de conversion de premières séquences numériques vers lesdites premières séquences analogiques,
ladite voie de réception comporte en outre un dispositif (507) de conversion desdites deuxièmes séquences analogiques vers des deuxièmes séquences numériques et,
ledit dispositif de calcul étant en outre apte à mettre en oeuvre un procédé selon l'une des revendications 7 à 10.

**Patentansprüche**

1. Verfahren zum Ermitteln von Störstellen auf einem Sendekanal (501) und einem Empfangskanal (502) eines Ausrüstungsteils,

wobei der Sendekanal ein erstes Gerät (504) zum Frequenzumsetzen einer analogen Sequenz in ein analoges Signal mittels einer ersten Umsetzungsfrequenz umfasst,

wobei der Empfangskanal ein zweites Gerät (505) zum Frequenzumsetzen eines analogen Signals in eine analoge Sequenz mittels einer zweiten Umsetzungsfrequenz umfasst, die sich von der ersten Umsetzungsfrequenz unterscheidet,

wobei das Verfahren die folgenden sequentiellen Schritte beinhaltet:

- einen Schritt (601) des Erzeugens von wenigstens zwei ersten unterschiedlichen analogen Sequenzen;
- einen Schritt (602) des Frequenzumsetzens der ersten analogen Sequenzen in analoge Signale durch den Sendekanal;
- einen Schritt (603) des Sendens von analogen Signalen von dem Sendekanal zu dem Empfangskanal;
- einen Schritt (604) des Frequenzumsetzens der empfangenen analogen Signale in zweite analoge Sequenzen durch den Empfangskanal;
- einen Schritt (605) des Berechnens von ersten Amplituden und ersten Phasen von mehreren Spektralkomponenten von wenigstens zwei der ersten analogen Sequenzen auf ersten Frequenzen von Interesse und von zweiten Amplituden und zweiten Phasen von mehreren Spektralkomponenten von wenigstens zwei der zweiten analogen Sequenzen auf ersten Frequenzen von Interesse,

wobei das Verfahren **dadurch gekennzeichnet ist, dass** es wenigstens einen der beiden folgenden unabhängigen Schritte beinhaltet:

- einen Schritt (606) des Ermittelns der Störstellen des Sendekanals nur auf der Basis der ersten Amplituden, ersten Phasen, zweiten Amplituden und zweiten Phasen; und
- einen Schritt (607) des Ermittelns der Störstellen des Empfangskanals nur auf der Basis der zweiten Amplituden und zweiten Phasen.

2. Verfahren nach Anspruch 1, bei dem wenigstens zwei der ersten analogen Sequenzen ungleich null sind, keine Version sind, die von einer zur anderen verzögert wird, und keine Version sind, die von einer zur anderen verstärkt wird.

3. Verfahren nach Anspruch 1, bei dem eine der ersten analogen Sequenzen von einer imaginären Sequenz gebildet wird und eine andere der ersten Sequenzen von einer realen Sequenz gebildet wird.

4. Verfahren nach Anspruch 1, bei dem wenigstens zwei der ersten analogen Sequenzen Mehrtonsequenzen des OFDM-(Orthogonal Frequency Division Multiplex)-Typs oder des SC-FDE-(Single-Carrier with Frequency-Domain Equalisation)-Modulationstyps oder des FBMC-(Filter Bank Multi-Carrier)-Modulationstyps oder analoge Sequenzen mit einem zyklischen Präfix und/oder einem zyklischen Postfix sind.

5. Verfahren nach einem der Ansprüche 1 bis 4, bei dem die Störstellen des Sendekanals durch einen ersten Gewinn und eine erste Phasenverschiebung modelliert werden, die das analoge Signal beim Senden über den Sendekanal beeinflussen.

6. Verfahren nach einem der Ansprüche 1 bis 5, bei dem die Störstellen des Empfangskanals durch einen zweiten Gewinn und eine zweite Phasenverschiebung modelliert werden, die das analoge Signal beim Empfangen über den Empfangskanal beeinflussen.

7. Verfahren nach einem der Ansprüche 1 bis 6, bei dem
der Sendekanal ferner ein Gerät (506) zum Umwandeln von ersten digitalen Sequenzen in die ersten analogen Sequenzen umfasst,
der Empfangskanal ferner ein Gerät (507) zum Umwandeln der zweiten analogen Sequenzen in zweite digitale Sequenzen umfasst,
wobei die ersten Frequenzen von Interesse wie folgt sind:

$$f_8 = -k_2 \frac{f_{ech}}{Nfft}$$

und

$$f_9 = k_2 \frac{f_{ech}}{Nfft} = -f_8$$

wobei:

$$k_2 \in \left[+1; \frac{Nfft}{2} - 1\right],$$

$f_{ech}$ eine Abtastfrequenz des Geräts zum Umwandeln der zweiten analogen Sequenzen in die zweiten digitalen Sequenzen repräsentiert, und

$Nfft$ eine Anzahl von Samples repräsentiert, die zum Berechnen der zweiten Amplituden und der zweiten Phasen aus den Spektralkomponenten der einen oder mehreren zweiten analogen Sequenzen repräsentiert.

8. Verfahren nach einem der Ansprüche 1 bis 7, bei dem
der Sendekanal ferner ein Gerät (506) zum Umwandeln von ersten digitalen Sequenzen in die ersten analogen Sequenzen umfasst,
der Empfangskanal ferner ein Gerät (507) zum Umwandeln der zweiten analogen Sequenzen in zweite digitale Sequenzen umfasst,
wobei die zweiten Frequenzen von Interesse wie folgt sind:

$$f_1 = (-k_2 - k_1) \frac{f_{ech}}{Nfft},$$

$$f_2 = (-k_2 + k_1) \frac{f_{ech}}{Nfft},$$

$$f_6 = (+k_2 - k_1) \frac{f_{ech}}{Nfft} = -f_2,$$

$$f_7 = (+k_2 + k_1) \frac{f_{ech}}{Nfft} = -f_1,$$

wobei:

$$k_1 \in \left[-\frac{Nfft}{2} + 1; \frac{Nfft}{2}\right],$$
$$k_1 \frac{f_{ech}}{Nfft} = \Delta f,$$

$\Delta f$ die Differenz zwischen der ersten Umsetzungsfrequenz und der zweiten Umsetzungsfrequenz repräsentiert,

$$k_2 \in \left[+1; \frac{Nfft}{2} - 1\right],$$

$f_{ech}$ die Abtastfrequenz des Geräts zum Umwandeln der zweiten analogen Sequenzen in die zweiten digitalen Sequenzen repräsentiert, und

$Nfft$ eine Anzahl von Samples repräsentiert, die zum Berechnen der zweiten Amplituden und der zweiten Phasen aus den Spektralkomponenten der einen oder mehreren zweiten analogen Sequenzen benutzt werden.

9. Verfahren nach den Ansprüchen 5, 7 und 8, wobei der Schritt (606) des Ermittelns der Störstellen des Sendekanals die Verwendung der folgenden Relationen beinhaltet:

$$\begin{cases} \varphi_{TX}est = Angle[K1_{TX}estfinale - K2_{TX}estfinale *] \\ g_{TX}est = |K1_{TX}estfinale - K2_{TX}estfinale *| \end{cases}$$

wobei:

$\varphi_{TX}$ eine Schätzung der ersten Phasenverschiebung des Sendekanals repräsentiert;
$g_{TX}$ eine Schätzung des ersten Gewinns des Empfangskanals repräsentiert,

$$K1_{TX}estfinale = \frac{K1_{TX}est1 + K1_{TX}est2}{2},$$

$$K2_{TX}estfinale = 1 - K1_{TX}estfinale^*,$$

* den Konjugiert-Operator repräsentiert:

$$K1_{TX}est1 = \frac{R_{f_7}(seq_1) \cdot E_{f_8}*(seq_2) - \dfrac{R_{f_7}(seq_2)}{\exp(+j \cdot \varphi_{\Delta f})} \cdot E_{f_8}*(seq_2)}{R_{f_7}(seq_1) \cdot \left[ E_{f_8}*(seq_2) - E_{f_9}(seq_2) \right] - \dfrac{R_{f_7}(seq_2)}{\exp(+j \cdot \varphi_{\Delta f})} \cdot \left[ E_{f_8}*(seq_1) - E_{f_9}(seq_1) \right]}$$

$$K1_{TX}est2 = \frac{R_{f_2}(seq_1) \cdot E_{f_9}*(seq_2) - \dfrac{R_{f_2}(seq_2)}{\exp(+j \cdot \varphi_{\Delta f})} \cdot E_{f_9}*(seq_2)}{R_{f_2}(seq_1) \cdot \left[ E_{f_9}*(seq_2) - E_{f_8}(seq_2) \right] - \dfrac{R_{f_2}(seq_2)}{\exp(+j \cdot \varphi_{\Delta f})} \cdot \left[ E_{f_9}*(seq_1) - E_{f_8}(seq_1) \right]}$$

$E_{f_j}(seq_i)$ eine Spektralkomponente von einer der ersten Sequenzen $seq_i$ auf der Frequenz $f_j$ repräsentiert,
$R_{f_j}(seq_i)$ eine Spektralkomponente von einer der zweiten Sequenzen $seq_i$ auf der Frequenz $f_j$ repräsentiert, und
$\varphi_{\Delta f}$ eine Phasenverschiebung repräsentiert, die durch eine Differenz zwischen der ersten Umsetzungsfrequenz und der zweiten Umsetzungsfrequenz verursacht wird.

10. Verfahren nach einem der Ansprüche 6 bis 9, wobei Schritt (607) des Ermittelns der Störstellen des Empfangskanals die Verwendung der folgenden Relationen beinhaltet:

$$\begin{cases} \varphi_{RX}est = Angle[K1_{RX}estfinale - K2_{RX}estfinale *] \\ g_{RX}est = |K1_{RX}est - K2_{RX}est *| \end{cases}$$

wobei:

$\varphi_{RX}$ eine Schätzung der zweiten Phasenverschiebung des Empfangskanals repräsentiert;
$g_{RX}$ eine Schätzung des zweiten Gewinns des Empfangskanals repräsentiert,

$$K1_{RX}estfinale = \frac{K1_{RX}est(seq_1) + [1 - K2^*_{RX}est(seq_1)] + K1_{RX}est(seq_2) + [1 - K2^*_{RX}est(seq_2)]}{4},$$

$$K2_{RX}estfinale = 1 - K1_{RX}estfinale^{*},$$

* den Konjugiert-Operator repräsentiert,

$$K1_{RX}\,est(seq_i) = \frac{R_{f_7}(seq_i)}{R_{f_7}(seq_i) + R_{f_1}{}^{*}(seq_i)},$$

$$K2_{RX}\,est(seq_i) = \frac{R_{f_6}(seq_i)}{R_{f_6}(seq_i) + R_{f_2}{}^{*}(seq_i)},$$

$R_{f_j}(seq_i)$ eine Spektralkomponente von einer der zweiten Sequenzen $seq_i$ auf der Frequenz $f_j$ repräsentiert.

**11.** Ausrüstungsteil, das einen Sendekanal und einen Empangskanal umfasst, wobei der Sendekanal ein erstes Gerät (504) zum Frequenzumsetzen einer analogen Sequenz in ein analoges Signal mit einer ersten Umsetzungsfrequenz umfasst,
der Empfangskanal ein zweites Gerät (505) zum Frequenzumsetzen eines analogen Signals in eine analoge Sequenz mittels einer zweiten Umsetzungsfrequenz umfasst,
wobei das Ausrüstungsteil ferner ein Rechengerät umfasst, das das Verfahren nach einem der Ansprüche 1 bis 6 implementieren kann.

**12.** Funksenderausrüstung nach Anspruch 11, wobei der Sendekanal ferner ein Gerät (506) zum Umwandeln der ersten digitalen Sequenzen in die ersten analogen Sequenzen umfasst,
der Empfangskanal ferner ein Gerät (507) zum Umwandeln der zweiten analogen Sequenzen in zweite digitale Sequenzen umfasst und
das Rechengerät auch ein Verfahren nach einem der Ansprüche 7 bis 10 implementieren kann.

**Claims**

**1.** A method for determining imperfections in a transmission channel (501) and a reception channel (502) of an apparatus,
said transmission channel comprising a first device (504) for frequency translating an analogue sequence into an analogue signal using a first translation frequency,
said reception channel comprising a second device (505) for frequency translating an analogue signal into an analogue sequence, using a second frequency translation different to said first frequency translation,
said method comprising the following sequential steps:

    • a step (601) of generating at least two first different analogue sequences;
    • a step (602) of frequency translating said first analogue sequences into analogue signals via said transmission channel;
    • a step (603) of transmitting analogue signals from said transmission channel to said reception channel;
    • a step (604) of frequency translating said received analogue signals into second analogue sequences via said reception channel;
    • a step (605) of computing first amplitudes and first phases from a plurality of spectral components of at least two of the first analogue sequences at first frequencies of interest and second amplitudes and second phases from a plurality of spectral components of at least two of the second analogue sequences at first frequencies of interest,

said method being **characterised in that** it comprises at least one of the two following independent steps:

• a step (606) of determining said imperfections of said transmission channel only on the basis of the first amplitudes, first phases, second amplitudes and second phases, and
• a step (607) of determining said imperfections of said reception channel only on the basis of said second amplitudes and second phases.

2. The method according to claim 1, wherein at least two of said first analogue sequences are non-zero, are not a delayed version of one another and are not an amplifier version of one another.

3. The method according to claim 1, wherein one of the first analogue sequences is made up of an imaginary sequence and another of the first sequences is made up of a real sequence.

4. The method according to claim 1, wherein at least two of said first analogue sequences are multi-tone sequences of the OFDM (Orthogonal Frequency-Division Multiplexing) type or of the SC-FDE (Single-Carrier with Frequency-Domain Equalisation) type or of the FBMC (Filter Bank Multi-Carrier) type or are analogue sequences using a cyclical prefix and/or a cyclical postfix.

5. The method according to any one of claims 1 to 4, wherein said imperfections of said transmission channel are modelled by a first gain and a first phase-shift affecting said analogue signal when it is transmitted via said transmission channel.

6. The method according to any one of claims 1 to 5, wherein said imperfections of said reception channel are modelled by a second gain and a second phase-shift affecting said analogue signal when it is received via said reception channel.

7. The method according to any one of claims 1 to 6, wherein said transmission channel further comprises a device (506) for converting first digital sequences into said first analogue sequences,
said reception channel further comprises a device (507) for converting said second analogue sequences into second digital sequences,
said first frequencies of interest are:

$$f_8 = -k_2 \frac{f_{ech}}{Nfft}$$

and

$$f_9 = k_2 \frac{f_{ech}}{Nfft} = -f_8$$

where:

$$k_2 \in \left[ +1 ; \frac{Nfft}{2} - 1 \right],$$

$f_{ech}$ represents a sampling frequency of said device for converting said second analogue sequences into said second digital sequences and
$Nfft$ represents a number of samples used to compute said second amplitudes and said second phases from said spectral components of the one or more second analogue sequences.

8. The method according to any one of claims 1 to 7, wherein said transmission channel further comprises a device (506) for converting first digital sequences into said first analogue sequences,
said reception channel further comprises a device (507) for converting said second analogue sequences into second digital sequences,
said second frequencies of interest are:

$$f_1 = (-k_2 - k_1)\frac{f_{ech}}{Nfft},$$

$$f_2 = (-k_2 + k_1)\frac{f_{ech}}{Nfft},$$

$$f_6 = (+k_2 - k_1)\frac{f_{ech}}{Nfft} = -f_2,$$

$$f_7 = (+k_2 + k_1)\frac{f_{ech}}{Nfft} = -f_1,$$

where:

$$k_1 \in \left[-\frac{Nfft}{2} + 1; \frac{Nfft}{2}\right],$$

$$k_1 \frac{f_{ech}}{Nfft} = \Delta f,$$

$\Delta f$ represents the difference between said first translation frequency and said second translation frequency,

$$k_2 \in \left[+1; \frac{Nfft}{2} - 1\right],$$

$f_{ech}$ represents said sampling frequency of said device for converting said second analogue sequences into said second digital sequences and

$Nfft$ represents a number of samples used to compute said second amplitudes and said second phases from said spectral components of the one or more second analogue sequences.

9. The method according to claims 5, 7 and 8, wherein said step (606) of determining said imperfections of said transmission channel comprises the use of the following relations:

$$\begin{cases} \varphi_{TX}est = Angle[K1_{TX}estfinale - K2_{TX}estfinale *] \\ g_{TX}est = |K1_{TX}estfinale - K2_{TX}estfinale *| \end{cases}$$

where:

$\varphi_{TX}$ represents an estimate of said first phase-shift of said transmission channel;
$g_{TX}$ represents an estimate of said first gain of said reception channel,

$$K1_{TX}estfinale = \frac{K1_{TX}est1 + K1_{TX}est2}{2},$$

$$K2_{TX}estfinale = 1 - K1_{TX}estfinale^*,$$

* represents the conjugate operator,

$$K1_{TX}\,est1 = \dfrac{R_{f_7}(seq_1)\cdot E_{f_8}{}^*(seq_2)-\dfrac{R_{f_7}(seq_2)}{\exp(+j\cdot\varphi_{\Delta f})}\cdot E_{f_8}{}^*(seq_2)}{R_{f_7}(seq_1)\cdot\left[E_{f_8}{}^*(seq_2)-E_{f_9}(seq_2)\right]-\dfrac{R_{f_7}(seq_2)}{\exp(+j\cdot\varphi_{\Delta f})}\cdot\left[E_{f_8}{}^*(seq_1)-E_{f_9}(seq_1)\right]}$$

$$K1_{TX}\,est2 = \dfrac{R_{f_2}(seq_1)\cdot E_{f_9}{}^*(seq_2)-\dfrac{R_{f_2}(seq_2)}{\exp(+j\cdot\varphi_{\Delta f})}\cdot E_{f_9}{}^*(seq_2)}{R_{f_2}(seq_1)\cdot\left[E_{f_9}{}^*(seq_2)-E_{f_8}(seq_2)\right]-\dfrac{R_{f_2}(seq_2)}{\exp(+j\cdot\varphi_{\Delta f})}\cdot\left[E_{f_9}{}^*(seq_1)-E_{f_8}(seq_1)\right]}$$

$E_{fj}(seq_i)$ represents a spectral component of one of said first sequences $seq_i$ at the frequency $f_j$;
$R_{fj}(seq_i)$ represents a spectral component of one of said second sequences $seq_i$ at the frequency $f_j$; and
$\varphi_{\Delta f}$ represents a phase-shift caused by a difference between said first translation frequency and said second translation frequency.

10. The method according to claims 6 to 9, wherein said step (607) of determining said imperfections of said reception channel comprises the use of the following relations:

$$\begin{cases}\varphi_{RX}est = Angle[K1_{RX}estfinale - K2_{RX}estfinale\,*]\\ g_{RX}est = |K1_{RX}est - K2_{RX}est\,*|\end{cases}$$

where:

$\varphi_{RX}$ represents an estimate of said second phase-shift of said reception channel;
$g_{RX}$ represents an estimate of said second gain of said reception channel,

$$K1_{RX}estfinale = \dfrac{K1_{RX}est(seq_1)+[1-K2^*_{RX}est(seq_1)]+K1_{RX}est(seq_2)+[1-K2^*_{RX}est(seq_2)]}{4},$$

$$K2_{RX}estfinale = 1 - K1_{RX}estfinale^*,$$

* represents the conjugate operator,

$$K1_{RX}\,est(seq_i)=\dfrac{R_{f_7}(seq_i)}{R_{f_7}(seq_i)+R_{f_1}{}^*(seq_i)},$$

$$K2_{RX}\,est(seq_i)=\dfrac{R_{f_6}(seq_i)}{R_{f_6}(seq_i)+R_{f_2}{}^*(seq_i)},$$

$R_{fj}(seq_i)$ represents a spectral component of one of said second sequences $seq_i$ at the frequency $f_j$.

**11.** An apparatus comprising a transmission channel and a reception channel, said transmission channel comprising a first device (504) for frequency translating an analogue sequence into an analogue signal using a first translation frequency,

said reception channel comprising a second device (505) for frequency translating an analogue signal into an analogue sequence using a second translation frequency,

said apparatus further comprising a computation device that is capable of implementing the method according to any one of claims 1 to 6.

**12.** A radio transmission apparatus according to claim 11, wherein said transmission channel further comprises a device (506) for converting first digital sequences into said first analogue sequences,

said reception channel further comprises a device (507) for converting said second analogue sequences into second digital sequences and

said computation device is also capable of implementing a method according to any one of claims 7 to 10.

FIG.1

FIG.2

FIG.3

a)

$\widehat{S}^{*}(-f).H^{*}(-f)$

$\widehat{S}(+f).H(+f)$

$-f_{OL}$

$f_{OL}$

$f$

$R'(f)$

b)

$f$

## FIG.4

508

Pre-compensation

501

Voie d'émission

CNA | Transposition

506 504

503

Commutateur

509

Post-compensation

Voie de réception

CAN | Transposition

502

507 505

## FIG.5

FIG.6

préfixe cyclique

a)

| Synchro. Temporelle seq$_0$ | CP | Séquence seq$_1$ | CS | CP | Séquence seq$_2$ | CS | ... | CP | Séquence seq$_1$ | CS | CP | Séquence seq$_2$ | CS |

suffixe cyclique

b)

| Synchro. Temporelle seq$_0$ | CP | Séquence seq$_1$ | CS | CP | Séquence seq$_2$ | CS | ... | CP | Séquence seq$_1$ | CS | CP | Séquence seq$_2$ | CS |

FIG.7

FIG.8

**RÉFÉRENCES CITÉES DANS LA DESCRIPTION**

**Documents brevets cités dans la description**

- WO 2008116821 A

- US 2008310534 A1

**Littérature non-brevet citée dans la description**

- **B. RAZAVI.** Design Considérations for Direct-Conversion Receivers. *IEEE Transactions on Circuits and Systems II : Analog and Digital Signal processing,* Juin 1997, vol. 44, 428-435